# DEMANDE DE BREVET EUROPEEN

(11) **EP 4 480 735 A1**
(43) Date de publication de la demande: **25.12.2024**
(21) Numéro de dépôt: 24180993.8
(22) Date de dépôt: 10.06.2024
(51) Int. Cl.: B60L 50/20, B60L 50/60

(54) **VÉHICULE À CAPOT PERFECTIONNÉ DE PROTECTION D'UNITÉ D'ALIMENTATION ÉLECTRIQUE AMOVIBLE**

(30) Priorité: 16.06.2023 FR 2306232
(71) Demandeur: G. Cartier Technologies, 74302 Cluses (FR)
(72) Inventeur: BOISIER, Pierre, 74130 BRIZON (FR); BREHERET, Jean-Luc, 74300 CHATILLON SUR CLUSES (FR)
(74) Mandataire: Cabinet Poncet

(57) **Abrégé**

Véhicule (1) ayant un compartiment de réception (3) conformé pour recevoir et contenir une unité d'alimentation électrique amovible, avec une ouverture (4) pour le passage de l'unité d'alimentation électrique, et avec un capot (5) articulé selon une charnière (6) et sollicité vers une position escamotée par un ressort de rappel de capot, dans lequel :
- des moyens de verrouillage de capot (7), actionnables par un utilisateur, sont agencés pour maintenir et verrouiller de façon réversible une seconde extrémité du capot (5b) au véhicule (1),
- des moyens de verrouillage de batterie (8), actionnables par l'utilisateur, sont agencés pour maintenir et verrouiller de façon réversible une seconde extrémité de batterie dans le compartiment de réception (3),
- les moyens de verrouillage de capot (7) et les moyens de verrouillage de batterie (8) sont reliés les uns aux autres de façon à fonctionner simultanément sous l'effet d'une sollicitation unique de l'utilisateur produisant le verrouillage et/ou le déverrouillage du capot (5) et de l'unité d'alimentation électrique.

## Description

### DOMAINE TECHNIQUE DE L'INVENTION

La présente invention concerne le domaine de l'alimentation électrique embarquée pour véhicules, notamment pour véhicules légers à assistance électrique tels que des bicyclettes, des trottinettes, des tricycles,...

Dans ce domaine, la source d'énergie électrique pour alimenter le moteur d'assistance électrique est une unité d'alimentation électrique embarquée sur le châssis du véhicule et comprenant une batterie d'accumulateurs électriques. La recharge de la batterie d'accumulateurs électriques est généralement assurée par un chargeur conformé pour transformer le courant alternatif d'entrée à 220 V d'une source extérieure d'énergie électrique en courant alternatif à plus faible tension qui est ensuite redressé pour fournir un courant continu de recharge de la batterie d'accumulateurs.

Le chargeur peut être embarqué, fixé et connecté en permanence à la batterie d'accumulateurs électriques, en étant connectable à volonté à ladite source extérieure d'énergie électrique. En alternative, le chargeur est soit fixe et connecté en permanence à la source extérieure d'énergie électrique, soit connectable à volonté à la batterie d'accumulateurs électriques et à ladite source extérieure d'énergie électrique.

La recharge de la batterie d'accumulateurs électriques se fait normalement lorsque l'unité d'alimentation électrique est extraite du véhicule, généralement pour être transportée dans un local surveillé où se trouve une connexion d'accès à la source extérieure d'énergie électrique.

En fonctionnement normal pour alimenter un moteur électrique d'assistance sur un véhicule, l'unité d'alimentation électrique embarquée est logée dans un compartiment de réception prévu à cet effet sur le véhicule, et conformé à la fois pour connecter l'unité d'alimentation électrique au moteur d'assistance électrique du véhicule et pour la protéger contre les agressions extérieures telles que les chocs et le ruissellement de la pluie.

Pour assurer ces fonctions tout en facilitant l'introduction et le retrait de l'unité d'alimentation électrique, le compartiment de réception est habituellement adapté pour couvrir de façon permanente cinq faces de l'unité d'alimentation électrique, avec une ouverture correspondant à la sixième face et obturable par un capot escamotable.

Dans l'application au vélo électrique, on a déjà proposé un capot amovible à verrouillage ou non par un système clé/barillet, non solidaire de l'unité d'alimentation électrique, et venant s'adapter sur l'ouverture du compartiment de réception pour l'obturer. Un inconvénient majeur de cette solution est le risque de perdre le capot lors d'un choc ou d'un mauvais engagement sur l'ouverture, ou le risque d'oublier le capot en fin de recharge. Dans le cas d'un capot verrouillé par une clé, un autre inconvénient est que le retrait ou l'adaptation du capot complique la manoeuvre pour remettre ou extraire l'unité d'alimentation électrique, car il faut une main pour tenir le capot ou le poser sur le sol avant de sortir une clé de verrouillage, l'autre main étant occupée pour saisir l'unité d'alimentation.

En alternative, comme illustré dans le document US 2021/265607 A1,on a déjà proposé un capot formé par l'unité d'alimentation électrique elle-même, ou solidarisé en permanence avec celle-ci. Un inconvénient de cette solution est alors l'absence de fermeture du compartiment de réception en l'absence de l'unité d'alimentation électrique (lorsque celle-ci est retirée afin de procéder à une recharge externe ou simplement pour limiter le risque de vol), pouvant inciter à des actes de malveillance, et pouvant autoriser des introductions d'eau dans la connectique. Un autre inconvénient de cette solution est que cela complique la forme de l'unité d'alimentation électrique.

De façon beaucoup plus confidentielle, on a déjà proposé un capot solidarisé en permanence sur le vélo par une charnière. Dans ce cas, on prévoit des moyens pour verrouiller l'unité d'alimentation électrique dans le compartiment de réception, afin d'éviter le vol de celle-ci après ouverture ou forçage du capot. Mais cela complique les opérations nécessaires pour la mise en place ou l'enlèvement de l'unité d'alimentation électrique : manoeuvre de la clé pour verrouiller ou déverrouiller, manoeuvre des moyens de verrouillage de l'unité d'alimentation électrique, manipulation de l'unité d'alimentation électrique, et éventuellement manoeuvre du capot et manoeuvre de verrouillage ou déverrouillage du capot.

Le document US 2022/096292 A1 décrit un véhicule conforme au préambule de la revendication 1, dans lequel l'unité d'alimentation électrique est insérée avec jeu dans un boîtier solidaire d'un capot. Le capot est monté rotatif sur le châssis du véhicule par une charnière, et est retenu en position fermée par des moyens de verrouillage agissant entre le capot et le châssis du véhicule. Le jeu nécessaire entre l'unité d'alimentation électrique et le boîtier autorise les vibrations relatives de l'unité d'alimentation électrique pendant le roulage du véhicule, ce qui génère des bruits et tend à dégrader progressivement les contacts électriques de la liaison électrique entre l'unité d'alimentation électrique et le moteur d'assistance électrique du véhicule.

Il existe donc un besoin pour, à la fois, faciliter ou réduire les opérations nécessaires pour la mise en place ou l'enlèvement de l'unité d'alimentation électrique, et éviter la génération de bruits et la dégradation progressive des contacts électriques.

Il existe aussi un besoin d'assurer une fermeture étanche du compartiment de réception, évitant les intrusions de liquides tant pendant la présence de l'unité d'alimentation électrique sur le véhicule que pendant son absence.

Par ailleurs, dans le cas d'un capot articulé sur le véhicule par une charnière, il existe un très fort risque d'endommager la charnière lorsque le capot, de forme allongée, est en position ouverte et constitue alors un bras de levier relativement long et susceptible de provoquer un stress important dans la charnière même dans le cas d'une sollicitation mécanique peu violente sur le capot.

Il existe donc un besoin d'empêcher que la charnière soit dégradée ou détruite lors des sollicitations mécaniques habituellement appliquées au capot pendant les utilisations normales.

### EXPOSE DE L'INVENTION

Un problème proposé par la présente invention est de concevoir un système de fermeture et de protection pour unité d'alimentation électrique embarquée et amovible, dans lequel une charnière permet la solidarisation en permanence d'un capot à un véhicule tout en autorisant l'ouverture et la fermeture d'un compartiment de réception pour l'unité d'alimentation électrique, dans lequel des moyens facilitent et réduisent les opérations nécessaires pour l'ouverture et la fermeture du capot, pour son verrouillage et son déverrouillage, et pour le maintien et la libération de l'unité d'alimentation électrique, et dans lequel des moyens empêchent la génération de bruits et la dégradation des contacts électriques de l'unité d'alimentation électrique.

Un autre problème proposé par la présente invention est de concevoir un tel système de fermeture et de protection pour unité d'alimentation électrique embarquée qui, en position fermée, assure une bonne étanchéité du compartiment de réception afin d'empêcher l'intrusion de liquides.

En complément éventuel, des moyens de protection permettent d'empêcher la dégradation ou la rupture de la charnière lors de sollicitations mécaniques appliquées sur le capot en position ouverte.

Pour atteindre ces objets ainsi que d'autres, l'invention propose un véhicule ayant un compartiment de réception allongé entre une première extrémité de compartiment et une seconde extrémité de compartiment et conformé pour recevoir et contenir une unité d'alimentation électrique amovible elle-même allongée entre une première extrémité de batterie venant se loger dans la première extrémité de compartiment et une seconde extrémité de batterie venant se loger dans la seconde extrémité de compartiment, le véhicule comprenant :
- une ouverture conformée pour autoriser l'introduction de l'unité d'alimentation électrique dans le compartiment de réception et son extraction hors du compartiment de réception,
- un capot, mobile entre une position de fermeture dans laquelle il occulte ladite ouverture et une position escamotée dans laquelle il libère ladite ouverture pour autoriser l'introduction ou l'extraction de l'unité d'alimentation électrique à travers ladite ouverture,
- une charnière, comportant une partie fixe de charnière, solidaire du véhicule ou prévue sur celui-ci, et une partie mobile de charnière reliée au capot et montée rotative autour d'un axe de rotation de capot solidaire de la partie fixe de charnière, la charnière reliant le capot au véhicule et autorisant le déplacement dudit capot par rotation entre sa position de fermeture et sa position escamotée ;
dans lequel :
- l'ouverture est allongée entre une première extrémité d'ouverture correspondant à la première extrémité de compartiment et une seconde extrémité d'ouverture correspondant à la seconde extrémité de compartiment,
- la charnière relie une première extrémité du capot au véhicule selon la première extrémité d'ouverture,
- des moyens de verrouillage de capot, actionnables par un utilisateur, sont agencés pour maintenir et verrouiller de façon réversible une seconde extrémité du capot au véhicule selon la seconde extrémité d'ouverture ;
en outre, selon l'invention :
- des moyens de verrouillage de batterie, actionnables par l'utilisateur, sont agencés pour maintenir et verrouiller de façon réversible une zone de seconde extrémité de batterie plaquée dans le fond du compartiment de réception au voisinage de la seconde extrémité d'ouverture,
- les moyens de verrouillage de capot et les moyens de verrouillage de batterie sont reliés les uns aux autres de façon à fonctionner simultanément sous l'effet d'une sollicitation unique de l'utilisateur produisant le verrouillage et/ou le déverrouillage du capot et de l'unité d'alimentation électrique.

La simultanéité de fonctionnement des moyens de verrouillage de capot et des moyens de verrouillage de batterie facilite et réduit les opérations que l'utilisateur doit effectuer pour extraire l'unité d'alimentation électrique hors du compartiment de réception. En outre, étant plaquée contre le fond du compartiment de réception par les moyens de verrouillage de batterie, l'unité d'alimentation électrique est rendue rigidement solidaire du châssis du véhicule et ne peut plus se déplacer ou vibrer par rapport au véhicule pendant le roulage. Cela évite notamment que les vibrations relatives génèrent du bruit pendant le roulage du véhicule, et dégradent progressivement les contacts électriques de la liaison électrique entre l'unité d'alimentation électrique et le moteur d'assistance électrique du véhicule.

En pratique, la simultanéité de fonctionnement des moyens de verrouillage de capot et des moyens de verrouillage de batterie peut être assurée en prévoyant que les moyens de verrouillage de capot et les moyens de verrouillage de batterie comprennent un ensemble de verrouillage commun :
- monté rotatif autour d'un axe de levier transversal fixe du véhicule entre une position de verrouillage et une position de libération,
- comprenant un bec distal d'accrochage de capot et un bec proximal d'accrochage de batterie,
- le bec distal d'accrochage de capot étant agencé de façon à tenir une zone de seconde extrémité du capot plaquée contre un rebord périphérique d'une zone de la seconde extrémité d'ouverture lorsque l'ensemble de verrouillage commun est en position de verrouillage,
- le bec proximal d'accrochage de batterie étant agencé de façon à tenir une zone de seconde extrémité de batterie plaquée dans le fond du compartiment de réception lorsque l'ensemble de verrouillage commun est en position de maintien ou de verrouillage.

L'ensemble de verrouillage commun peut être actionnable par l'utilisateur au moyen d'une clé pouvant être engagée dans un rotor à tenon excentré engagé dans un logement à cames et dont la rotation produit le pivotement de l'ensemble de verrouillage commun entre sa position de verrouillage et sa position de libération.

Selon un mode de réalisation particulièrement simple, on prévoit que :
- le capot comprend une excroissance de capot sur laquelle vient porter le bec distal d'accrochage de capot lorsque le capot est en position de fermeture et l'ensemble de verrouillage commun est en position de verrouillage,
- l'excroissance de capot et le bec distal d'accrochage de capot sont agencés de façon que la rotation finale de l'ensemble de verrouillage commun vers sa position de verrouillage provoque une rotation finale du capot jusqu'à sa position de fermeture en plaquant une zone de seconde extrémité de capot contre un rebord périphérique d'une zone de seconde extrémité de l'ouverture.

Cette disposition particulière permet de garantir une bonne étanchéité de fermeture du capot dans la zone de seconde extrémité du compartiment de réception.

De préférence, on peut aussi prévoir que :
- l'unité d'alimentation comprend une excroissance de batterie sur laquelle vient porter le bec proximal d'accrochage de batterie lorsque l'ensemble de verrouillage commun est en position de verrouillage,
- l'excroissance de batterie et le bec proximal d'accrochage de batterie sont agencés de façon que la rotation finale de l'ensemble de verrouillage commun vers sa position de verrouillage provoque une pression sur l'unité d'alimentation électrique en plaquant une zone de seconde extrémité de batterie dans le fond du compartiment de réception.

Cette disposition particulière permet de garantir une bonne tenue de l'unité d'alimentation électrique sans nécessiter une opération supplémentaire de l'utilisateur autre que la simple manoeuvre de la clé de verrouillage.

Selon un mode de réalisation préféré, on prévoit en outre que :
- le capot est sollicité par un ressort de rappel de capot, disposé sur son axe de rotation de capot, et qui est agencé pour le faire pivoter jusqu'à sa position escamotée en l'absence d'un obstacle ou d'une sollicitation de retenue exercée par l'utilisateur,
- l'unité d'alimentation électrique est sollicitée par un ressort de calage, disposé entre la zone de seconde extrémité de batterie et le fond du compartiment de réception, et qui tend à repousser la zone de seconde extrémité de batterie hors du compartiment de réception,
- de sorte que la rotation de l'ensemble de verrouillage commun vers sa position de libération, produite par une manoeuvre de la clé, provoque quasi simultanément la libération du capot qui pivote jusqu'à sa position escamotée sous l'action du ressort de rappel de capot, et la libération de l'unité d'alimentation électrique qui pivote légèrement vers l'extérieur du compartiment de réception sous la poussée du ressort de calage pour faciliter sa préhension par l'utilisateur.

Cette disposition particulière facilite et réduit considérablement les opérations que doit exécuter l'utilisateur pour accéder à l'unité d'alimentation électrique, car la simple manoeuvre de la clé de verrouillage produit simultanément le déverrouillage du capot, l'ouverture complète du capot, et la libération de l'unité d'alimentation électrique qui pivote légèrement vers l'extérieur du compartiment de réception sous la poussée du ressort de calage pour faciliter sa préhension par l'utilisateur.

De préférence, l'ensemble de verrouillage commun est sollicité en permanence par un ressort de rappel de levier qui tend à le faire pivoter jusqu'à sa position de verrouillage lorsque l'unité d'alimentation électrique est absente, ou jusqu'à une position de maintien lorsque l'unité d'alimentation électrique est présente.

De la sorte, le ressort de rappel de levier garantit en permanence de maintenir la position de maintien (bec proximal d'accrochage de batterie engagé sur la partie supérieure de l'excroissance de batterie) lorsque cette position a été atteinte par appui sur l'unité d'alimentation électrique lors de l'engagement de celle-ci par l'utilisateur. Ce même ressort de rappel de levier tend à aider l'utilisateur lors de la rotation de la clé pour passer de la position de maintien à la position de verrouillage permettant l'extraction de la clé.

Dans une réalisation préférée, l'excroissance de batterie et le bec proximal d'accrochage de batterie sont agencés de façon que, lors d'une rotation de l'ensemble de verrouillage commun vers sa position de verrouillage sous l'action de son ressort de rappel de levier, alors que l'unité d'alimentation électrique est pivotée légèrement vers l'extérieur du compartiment de réception, le bec proximal d'accrochage de batterie bute contre une face frontale de fermeture de l'excroissance de batterie, de sorte que le bec proximal d'accrochage de batterie ne s'oppose pas à l'extraction de l'unité d'alimentation électrique hors du compartiment de réception.

On facilite encore ainsi l'extraction de l'unité d'alimentation électrique.

De préférence, on peut encore prévoir que l'excroissance de capot et le bec distal d'accrochage de capot sont agencés avec des faces d'appui correspondantes de façon que, lorsque l'unité d'alimentation électrique est absente ou engagée dans le fond du compartiment de réception, lorsque l'ensemble de verrouillage commun est dans sa position de verrouillage sous l'action de son ressort de rappel de levier lorsque l'unité d'alimentation électrique est absente, ou sous l'action de la clé lorsque l'unité d'alimentation électrique est présente, et lorsqu'une poussée est appliquée sur le capot pour le faire pivoter vers sa position de fermeture, l'excroissance de capot repousse le bec distal d'accrochage de capot et l'ensemble de verrouillage commun à l'écart de sa forme ou de sa position de verrouillage (unité d'alimentation électrique absente) ou de sa position de maintien (unité d'alimentation électrique présente) sans toutefois libérer l'unité d'alimentation électrique, puis laisse revenir l'ensemble de verrouillage commun dans sa forme initiale ou sa position de verrouillage ou de maintien sous l'action de son ressort de rappel de levier, assurant ainsi le verrouillage du capot tout en plaquant une zone de seconde extrémité du capot contre un rebord périphérique d'une zone de seconde extrémité d'ouverture. En présence de l'unité d'alimentation électrique, la rotation de la clé vers la position de verrouillage permet ce même plaquage du capot.

Plusieurs étapes peuvent se produire :
- clé présente, donc en position de maintien : la fermeture du capot génère une légère rotation de l'ensemble de verrouillage commun ; après la fermeture du capot, il faut que l'utilisateur génère un effort sur la clé pour atteindre la position de verrouillage/extraction en plaquant une zone de seconde extrémité du capot contre un rebord périphérique d'une zone de seconde extrémité d'ouverture ;
- clé retirée : la fermeture du capot génère une déformation de l'ensemble de verrouillage commun et permet son verrouillage, puis laisse revenir l'ensemble de verrouillage commun dans sa forme initiale, assurant ainsi le verrouillage du capot tout en plaquant une zone de seconde extrémité du capot contre un rebord périphérique d'une zone de seconde extrémité d'ouverture.

On facilite ainsi l'opération de fermeture du capot.

Afin de permettre une introduction de l'unité d'alimentation électrique dans le compartiment de réception lorsque la clé est présente mais sans manoeuvre de rotation de celle-ci par l'utilisateur, il est avantageux de prévoir que l'excroissance de batterie et le bec proximal d'accrochage de batterie sont agencés avec des faces d'appui correspondantes de façon que, lorsque l'ensemble de verrouillage commun est dans sa position de verrouillage sous l'action de son ressort de rappel de levier, et lorsqu'une poussée est appliquée sur l'unité d'alimentation électrique pour la faire pivoter vers sa position d'engagement complet dans le compartiment de réception, l'excroissance de batterie repousse le bec proximal d'accrochage de batterie et l'ensemble de verrouillage commun à l'écart de sa position de verrouillage, puis laisse revenir l'ensemble de verrouillage commun vers sa position de maintien sous l'action de son ressort de rappel de levier, l'ensemble de verrouillage commun assurant ainsi la retenue de l'unité d'alimentation électrique dans le compartiment de réception, en l'attente de son verrouillage par maintien de l'effort et simple extraction de la clé, ou par une rotation de la clé en position verrouillage et extraction de la clé.

On facilite ainsi l'opération d'introduction de l'unité d'alimentation électrique.

Selon un premier mode de réalisation de l'invention, l'ensemble de verrouillage commun comprend un levier de verrouillage monobloc comportant une première branche portant le bec proximal d'accrochage de batterie et une deuxième branche portant le bec distal d'accrochage de capot.

Selon un second mode de réalisation de l'invention, l'ensemble de verrouillage commun comprend un levier de verrouillage principal comportant le bec proximal d'accrochage de batterie, un levier de verrouillage auxiliaire comportant le bec proximal d'accrochage de capot, et un ressort de liaison tendant à rapprocher le levier de verrouillage auxiliaire vers le levier de verrouillage principal, le levier de verrouillage auxiliaire et le levier de verrouillage principal étant montés rotatifs autour du même axe de levier, le ressort de rappel de levier appliquant sa force de rappel sur le levier de verrouillage principal pour tendre à le faire pivoter jusqu'à sa position de verrouillage ou de maintien.

Selon un mode de réalisation, on peut prévoir que :
- la partie mobile de charnière est reliée au capot par des moyens de liaison mécanique débrayable et des moyens de butée de retenue,
- les moyens de liaison mécanique débrayable sont conformés pour assurer une liaison fixe entre le capot et la partie mobile de charnière en l'absence de sollicitations mécaniques forçant le capot à l'écart de la partie mobile de charnière selon une intensité supérieure à un seuil de déclenchement prédéterminé,
- les moyens de liaison mécanique débrayable sont conformés pour inhiber leur effet de retenue du capot vis-à-vis de la partie mobile de charnière en présence d'au moins une sollicitation mécanique forçant le capot à l'écart de la partie mobile de charnière selon une intensité supérieure audit seuil de déclenchement prédéterminé,
- les moyens de liaison mécanique débrayable sont conformés pour permettre de relier à nouveau de façon fixe le capot à la partie mobile de charnière par rapprochement manuel du capot et de la partie mobile de charnière l'un contre l'autre,
- les moyens de butée de retenue sont conformés pour s'opposer à l'écartement du capot vis-à-vis de la partie mobile de charnière au-delà d'une course d'écartement prédéterminée et pour autoriser une oscillation limitée du capot vis-à-vis de la partie mobile de charnière, après un débrayage des moyens de liaison mécanique débrayable.

On empêche ainsi la dégradation ou la rupture de la charnière lors de sollicitations mécaniques appliquées sur le capot en position ouverte.

Selon un mode de réalisation simple et efficace, les moyens de liaison mécanique débrayable comprennent :
- un bras de charnière, solidaire de la partie mobile de charnière, et se développant longitudinalement entre une première extrémité proximale et une seconde extrémité distale,
- une rainure longitudinale, prévue sur une face interne du capot, et conformée pour recevoir et retenir sélectivement ledit bras de charnière,
- une butée distale escamotable, conformée pour prendre sélectivement un état de retenue dans lequel elle retient dans ladite rainure longitudinale la seconde extrémité du bras de charnière, et un état de libération dans lequel elle libère la seconde extrémité du bras de charnière vis-à-vis de la rainure longitudinale,
- une butée proximale, conformée pour retenir la première extrémité du bras de charnière dans ladite rainure longitudinale lorsque la butée distale est en état de retenue, et conformée pour s'opposer à l'écartement du capot vis-à-vis de la partie mobile de charnière au-delà d'une course d'écartement prédéterminée et pour autoriser une oscillation limitée du capot vis-à-vis de la partie mobile de charnière, lorsque la butée distale est en état de libération.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue de côté d'une bicyclette comportant un dispositif selon l'invention, le capot étant en position escamotée ;
[Fig.2] La figure 2 est une vue de côté en coupe d'un tronçon de poutre de cadre de bicyclette incorporant un compartiment de réception contenant une unité d'alimentation électrique, avec un couvercle articulé par une charnière, et avec des moyens de verrouillage selon un mode de réalisation de l'invention, l'ensemble étant en position fermée et verrouillée ;
[Fig.3] La figure 3 est une vue de côté en coupe illustrant l'ensemble de la figure 2 lorsque le capot est en position escamotée, non débrayée ;
[Fig.4] La figure 4 est une vue de côté en coupe illustrant l'ensemble de la figure 2 lorsque le capot est en position escamotée et débrayée ;
[Fig.5] La figure 5 est une vue partielle de côté en coupe illustrant plus en détail les moyens de verrouillage de capot et les moyens de verrouillage de batterie selon un premier mode de réalisation, en position de verrouillage ;
[Fig.6] La figure 6 est une vue partielle en perspective illustrant les moyens de verrouillage de capot et les moyens de verrouillage de batterie, dans la position de la figure 5 ;
[Fig.7] La figure 7 est une vue partielle de côté en coupe illustrant les moyens de verrouillage de capot et les moyens de verrouillage de batterie, le levier de verrouillage étant en position de libération du capot, la clé étant en position de verrouillage ;
[Fig.8] La figure 8 est une vue partielle de côté en coupe illustrant les moyens de verrouillage de capot et les moyens de verrouillage de batterie, le levier de verrouillage étant en position intermédiaire, capot escamoté, unité d'alimentation électrique libérée ;
[Fig.9] La figure 9 est une vue partielle de côté en coupe illustrant les moyens de verrouillage de capot et les moyens de verrouillage de batterie, en début de fermeture du capot, unité d'alimentation électrique absente, la clé étant en position de verrouillage ;
[Fig. 10] La figure 10 est une vue partielle de côté en coupe illustrant les moyens de verrouillage de capot et les moyens de verrouillage de batterie, en fin de fermeture du capot, unité d'alimentation électrique absente ;
[Fig.11] La figure 11 est une vue partielle de côté en coupe illustrant les moyens de verrouillage de capot et les moyens de verrouillage de batterie, en début d'introduction de l'unité d'alimentation électrique ;
[Fig.12] La figure 12 est une vue partielle de côté en coupe illustrant les moyens de verrouillage de capot et les moyens de verrouillage de batterie, en fin d'introduction de l'unité d'alimentation électrique ;
[Fig.13] La figure 13 est une vue partielle de côté en coupe illustrant les moyens de verrouillage de capot et les moyens de verrouillage de batterie, après relâchement de l'unité d'alimentation électrique ; et
[Fig.14] La figure 14 est une vue partielle de côté en coupe illustrant les moyens de verrouillage de capot et les moyens de verrouillage de batterie selon un second mode de réalisation.

### DESCRIPTION DES MODES DE REALISATION PREFERES

Lorsque des références numériques identiques sont utilisées dans plusieurs figures, modes de réalisation ou variantes de l'invention, ces références numériques désignent des éléments identiques ou similaires dans chacun(e) des figures, modes de réalisation ou variantes.

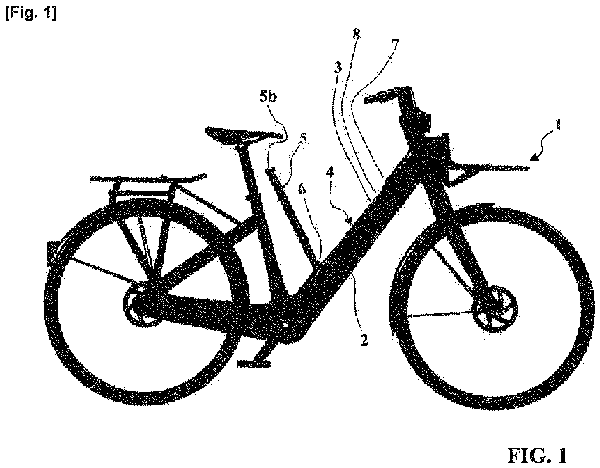

On considère tout d'abord la figure 1, qui illustre un véhicule selon la présente invention, dans un mode de réalisation de type bicyclette.

Dans ce mode de réalisation, la bicyclette 1 comporte un cadre avec une poutre centrale oblique ascendante 2 dans laquelle est ménagé un compartiment de réception 3 ayant une ouverture 4 située sur la face supérieure de ladite poutre 2. L'ouverture 4 est conformée pour autoriser l'introduction d'une unité d'alimentation électrique dans le compartiment de réception 3 et son extraction hors du compartiment de réception 3.

Un capot 5 permet d'occulter l'ouverture 4 dans une position de fermeture, et permet de donner l'accès à l'ouverture 4 dans une position escamotée telle qu'illustrée sur la figure 1. Pour cela, le capot 5 est articulé sur la poutre 2 par une charnière 6 à une extrémité de l'ouverture 4.

Dans sa position de fermeture, le capot 5 est rabattu sur la face supérieure de la poutre 2, et des moyens de verrouillage de capot 7 sont agencés à une autre extrémité de l'ouverture 4 pour maintenir et verrouiller de façon réversible l'extrémité libre 5b du capot 5.

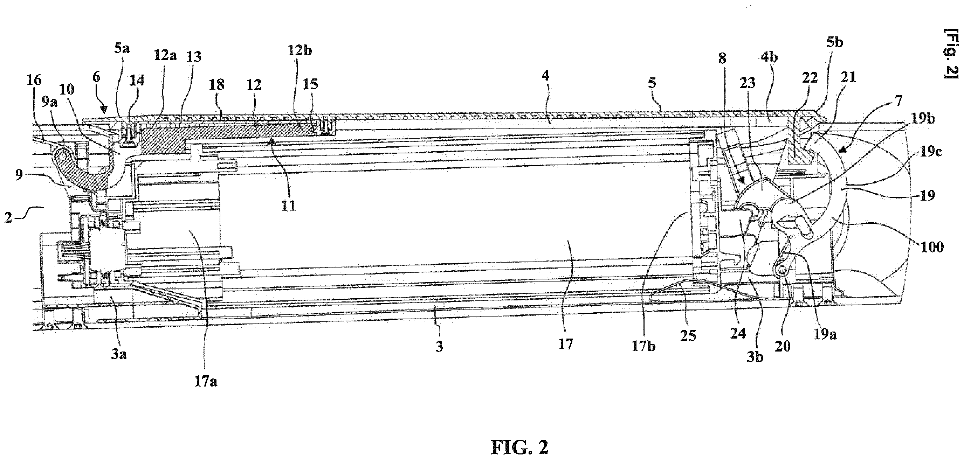

On considère maintenant les figures 2 à 4, qui illustrent plus en détail, en vue générale de côté en coupe, le tronçon de poutre 2. Le tronçon de poutre 2 comprend le compartiment de réception 3, lui-même allongé entre une première extrémité de compartiment 3a et une seconde extrémité de compartiment 3b. L'ouverture supérieure 4 est elle-même allongée entre une première extrémité d'ouverture 4a correspondant à la première extrémité de compartiment 3a et une seconde extrémité d'ouverture 4b correspondant à la seconde extrémité de compartiment 3b. Le capot 5 est articulé selon une première extrémité de capot 5a par la charnière 6, et sa seconde extrémité 5b peut être retenue en position de fermeture et verrouillée de façon réversible par les moyens de verrouillage de capot 7. Le capot 5 est sollicité par un ressort de rappel de capot 16, disposé sur un axe de rotation de capot 9a, et qui est agencé pour le faire pivoter jusqu'à sa position escamotée en l'absence d'un obstacle ou d'une sollicitation de retenue exercée par l'utilisateur.

Sur ces figures, on a représenté une unité d'alimentation électrique 17, logée dans le compartiment de réception 3, et elle-même allongée entre une première extrémité de batterie 17a venant se loger dans la première extrémité de compartiment 3a et une seconde extrémité de batterie 17b venant se loger dans la seconde extrémité de compartiment 3b.

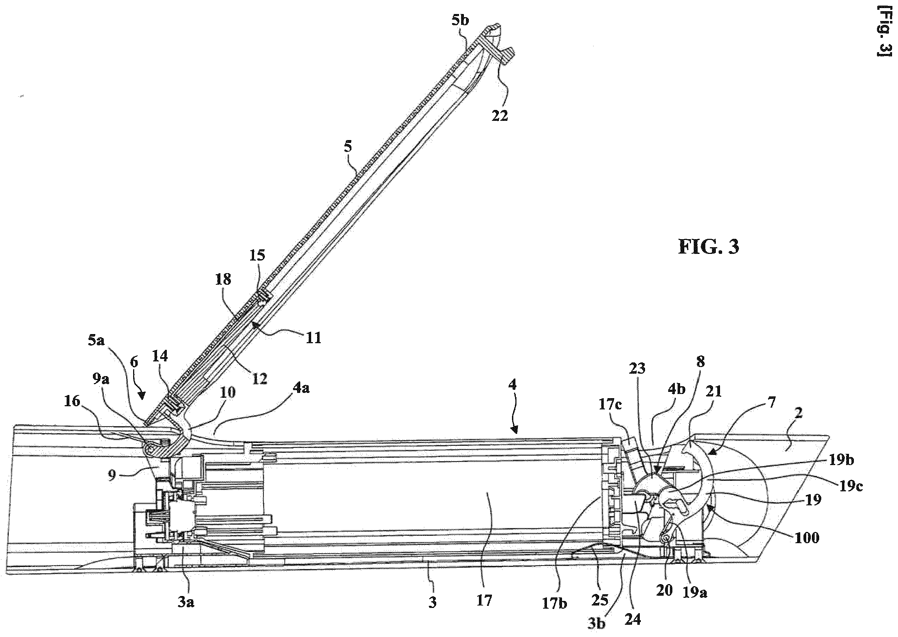

Sur la figure 2, le capot 5 est en position fermée, plaqué de façon étanche sur le pourtour de l'ouverture 4 par les moyens de verrouillage de capot 7, tandis que l'unité d'alimentation électrique 17 est plaquée dans le fond du compartiment de réception 3 par des moyens de verrouillage de batterie 8. Sur la figure 3, le capot 5 est en position escamotée, laissant l'accès au compartiment de réception 3 et à l'unité d'alimentation électrique 17 par l'ouverture supérieure 4.

La charnière 6 comprend d'une part une partie fixe de charnière 9, solidaire du véhicule, c'est-à-dire dans le cas présent solidaire de la poutre 2, et comportant l'axe de rotation de capot 9a. La charnière 6 comprend d'autre part une partie mobile de charnière 10 reliée au capot 5 et montée rotative autour de l'axe de rotation de capot 9a solidaire de la partie fixe de charnière 9. La charnière 6 est conformée de façon à autoriser le déplacement du capot 5 par rotation entre sa position de fermeture illustrée sur la figure 2 et sa position escamotée illustrée sur les figures 1 et 3.

La partie mobile de charnière 10 est reliée au capot 5 par des moyens de liaison mécanique débrayable 11. Dans leur état illustré sur les figures 2 et 3, les moyens de liaison mécanique débrayable 11 ne sont pas débrayés, et assurent une liaison mécanique fixe entre le capot 5 et la partie mobile de charnière 10. Cet état non débrayé est conservé tant qu'une sollicitation mécanique forçant le capot 5 à l'écart de la partie mobile de charnière 10 reste inférieure à un seuil de déclenchement prédéterminé.

Dans le détail du mode de réalisation illustré sur les figures 2 à 4, les moyens de liaison mécanique débrayable 11 comprennent un bras de charnière 12, solidaire de la partie mobile de charnière 10, et se développant longitudinalement entre une première extrémité proximale 12a et une seconde extrémité distale 12b du bras de charnière. Une rainure longitudinale 13 est prévue sur une face interne du capot 5, et est conformée pour recevoir et retenir sélectivement ledit bras de charnière 12.

Pour retenir le bras de charnière 12 dans la rainure longitudinale 13 du capot 5, on prévoit une butée proximale 14 conformée pour retenir la première extrémité 12a du bras de charnière 12 dans ladite rainure longitudinale 13, et on prévoit une butée distale escamotable 15 conformée pour prendre sélectivement un état de retenue dans lequel elle retient dans ladite rainure longitudinale 13 la seconde extrémité 12b du bras de charnière, et un état de libération dans lequel elle libère la seconde extrémité 12b du bras de charnière 12 vis-à-vis de la rainure longitudinale 13.

Dans le mode de réalisation illustré sur les figures 2 à 4, la butée distale escamotable 15 comprend une excroissance en forme de tête, dépassant axialement vers l'intérieur depuis l'extrémité de la rainure longitudinale 13, et un logement de retenue prévu en face frontale de la seconde extrémité 12b du bras de charnière 12. Le logement de retenue est une cavité en forme de calotte sphérique à bord périphérique évasé dans laquelle la tête, de forme hémisphérique, pénètre selon une profondeur inférieure à son rayon en étant poussée par des moyens élastiques. De la sorte, un effort transversal appliqué sur le capot 5 peut faire sortir la tête hors du logement de retenue, débrayant ainsi la liaison mécanique débrayable 11, lorsque cet effort transversal est suffisant pour contrer l'effort de retenue exercé par les moyens élastiques.

Dans le mode de réalisation illustré sur les figures 2 à 4, la butée proximale 14 comprend une tige solidaire du capot 5, qui pénètre dans un logement solidaire du bras de charnière 12 et qui se termine par une tête emprisonnée de façon lâche dans ledit logement. Un débattement possible de la tête dans le logement permet des translations et rotations relatives du capot 5 vis-à-vis du bras de charnière 12, tout en limitant lesdites translations et rotations.

Sur la figure 3, le capot 5 est en position escamotée, laissant l'accès au compartiment de réception 3 par l'ouverture supérieure 4, le capot 5 restant fixé de façon rigide à la partie mobile de charnière 10 par le fait que la butée distale 15 n'est pas déverrouillée.

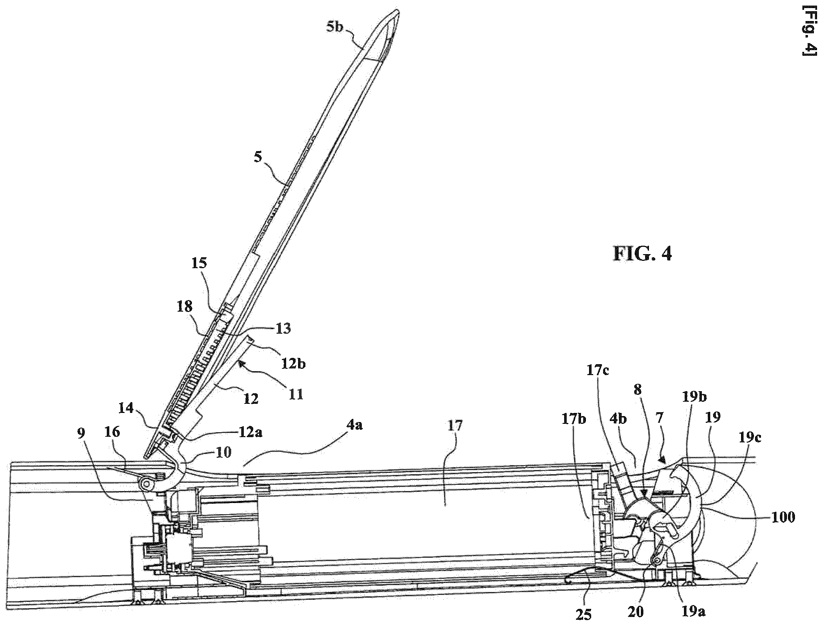

Sur la figure 4, le capot 5 est en position escamotée, mais la liaison mécanique 11 est débrayée, la butée distale 15 étant en position de libération, la seconde extrémité 12b du bras de charnière 12 étant libérée vis-à-vis du capot 5. Dans cette position, le capot 5 reste retenu vis-à-vis de la partie mobile de charnière 10 par la butée proximale 14, laquelle autorise des mouvements limités de translation et de rotation du capot 5 vis-à-vis de la partie mobile de charnière 10.

Sur ces mêmes figures 2 à 4, on considère maintenant plus spécialement les moyens de verrouillage de capot 7 et les moyens de verrouillage de batterie 8. Les moyens de verrouillage de capot 7 sont agencés pour maintenir et verrouiller de façon réversible la seconde extrémité 5b du capot 5 sur la poutre 2 selon la seconde extrémité 4b de l'ouverture 4. De même, les moyens de verrouillage de batterie 8 sont agencés pour plaquer et verrouiller de façon réversible la seconde extrémité de batterie 17b dans la seconde extrémité 3b du compartiment de réception 3.

Selon l'invention, les moyens de verrouillage de capot 7 et les moyens de verrouillage de batterie 8 sont agencés sous forme d'un ensemble de verrouillage commun 100, monté rotatif autour d'un axe de levier 20 transversal fixe de la poutre 2 entre une position de verrouillage illustrée sur la figure 2 et une position de libération illustrée sur les figures 3 et 4.

L'ensemble de verrouillage commun 100 comprend un bec distal d'accrochage de capot 21. En position de verrouillage de l'ensemble de verrouillage commun 100, le bec distal d'accrochage de capot 21 coopère avec une excroissance de capot 22, lorsque le capot 5 est en position de fermeture, pour tenir la seconde extrémité 5b du capot 5 plaquée de façon étanche contre un rebord périphérique de l'ouverture 4. En position de libération de l'ensemble de verrouillage commun 100, le bec distal d'accrochage de capot 21 reste à l'écart de l'excroissance de capot 22, autorisant le libre pivotement du capot 5, lequel pivote vers sa position escamotée sous l'action du ressort de rappel de capot 16.

L'ensemble de verrouillage commun 100 comprend un bec proximal d'accrochage de batterie 23. En position de verrouillage de l'ensemble de verrouillage commun 100, le bec proximal d'accrochage de batterie 23 coopère avec une excroissance de batterie 24, lorsque l'unité d'alimentation électrique 17 est engagée dans le fond du compartiment de réception 3, pour tenir l'unité d'alimentation électrique 17 plaquée contre le fond du compartiment de réception 3. En position de libération de l'ensemble de verrouillage commun 100, le bec proximal d'accrochage de batterie 23 reste à l'écart de l'excroissance de batterie 24, autorisant la manipulation de l'unité d'alimentation électrique 17 à travers l'ouverture 4 pour son introduction ou son retrait. Lors d'une rotation de l'ensemble de verrouillage commun 100 vers sa position de libération, l'unité d'alimentation électrique 17 est légèrement repoussée vers l'extérieur par un ressort de calage 25, facilitant sa préhension.

L'ensemble de verrouillage commun 100 est actionnable en rotation par un utilisateur, pour le verrouillage et le déverrouillage. On comprend que, selon l'invention, les moyens de verrouillage de capot 7 et les moyens de verrouillage de batterie 8 sont reliés les uns aux autres par l'ensemble de verrouillage commun 100 de façon à fonctionner simultanément sous l'effet d'une sollicitation unique de l'utilisateur produisant, par la rotation de l'ensemble de verrouillage commun 100, le verrouillage et/ou le déverrouillage du capot 5 et de l'unité d'alimentation électrique 17. En outre, l'ensemble de verrouillage commun 100 est sollicité en permanence par un ressort de rappel de levier 19a qui tend à le faire pivoter jusqu'à sa position de verrouillage (unité d'alimentation électrique absente) ou de maintien (unité d'alimentation électrique présente).

Dans le premier mode de réalisation illustré sur ces figures 2 à 4, l'ensemble de verrouillage commun 100 comprend un levier de verrouillage monobloc 19 à deux branches, une première branche 19b plus courte comportant à son extrémité libre le bec proximal d'accrochage de batterie 23, une deuxième branche 19c plus longue comportant à son extrémité libre le bec distal d'accrochage de capot 21.

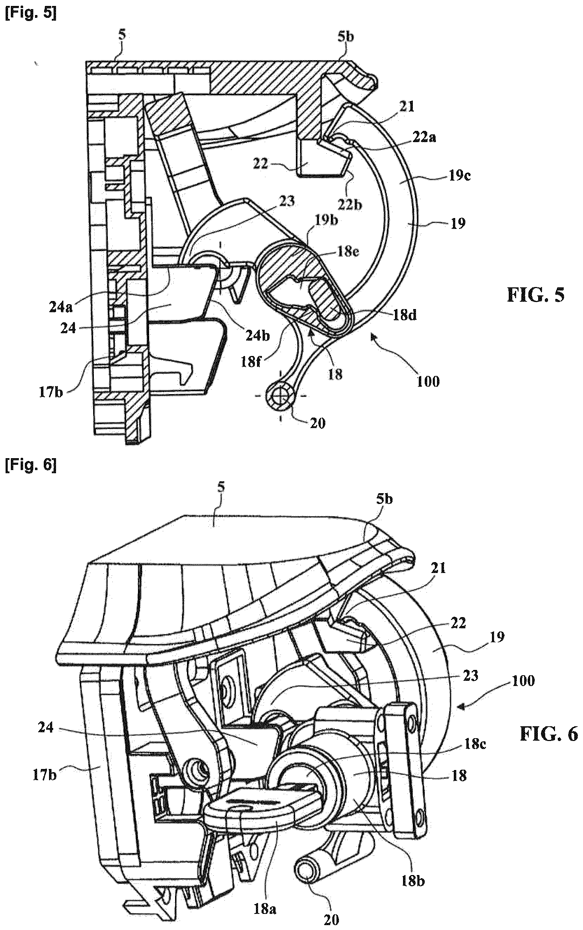

On considère maintenant les figures 5 et 6, qui illustrent à plus grande échelle, en vue de côté respectivement en coupe et en perspective, les moyens de verrouillage de capot 7 et les moyens de verrouillage de batterie 8 selon ce premier mode de réalisation. Sur ces figures, on retrouve les principaux organes déjà décrits en relation avec les figures 2 à 4, le levier de verrouillage monobloc 19 étant en position de verrouillage.

Sur ces figures 5 et 6, on distingue en outre :
- sur l'excroissance de capot 22, une facette supérieure inclinée de verrouillage 22a, une facette frontale inclinée de fermeture 22b,
- sur l'excroissance de batterie 24, une facette supérieure horizontale de verrouillage 24a, une facette frontale inclinée de fermeture 24b,
- dans la partie intermédiaire ou zone de raccordement des deux branches du levier de verrouillage monobloc 19, des moyens d'engagement de verrou à clé 18 pour la manoeuvre en rotation du levier de verrouillage monobloc 19 par l'utilisateur au moyen d'une clé 18a.

En l'espèce, les moyens d'engagement de verrou à clé 18 comprennent un cylindre de serrure formé d'un stator 18b fixe sur la poutre 2 et dans lequel est monté à rotation un rotor 18c recevant la clé 18a et prolongé par un tenon 18d excentré à section transversale oblongue, lequel tenon 18d étant engagé dans un logement 18e à cames du levier de verrouillage monobloc 19.

Dans la position de verrouillage illustrée sur la figure 5, le bec proximal d'accrochage de batterie 23 est en appui sur la facette supérieure horizontale de verrouillage 24a, et le bec distal d'accrochage de capot 21 est en appui sur la facette supérieure inclinée de verrouillage 22a. Le tenon 18d, fixe avec le rotor 18c bloqué en position verrouillée sans la clé 18a, forme une butée contre laquelle porte la came 18f pour interdire la rotation du levier de verrouillage 19. Par l'effet de l'inclinaison de la facette supérieure de verrouillage 22a, de l'effort de rotation du levier de verrouillage 19 produit par le ressort de rappel de levier 19a, et du blocage par le moyen d'engagement de verrou à clé 18, la seconde extrémité 5b du capot 5 se trouve plaquée de façon étanche contre un rebord périphérique de l'ouverture 4. Autrement dit, la rotation finale du levier de verrouillage 19 vers sa position de verrouillage provoque une rotation finale du capot 5 jusqu'à sa position de fermeture en plaquant une zone de seconde extrémité de capot 5b contre un rebord périphérique d'une zone de seconde extrémité de l'ouverture 4b.

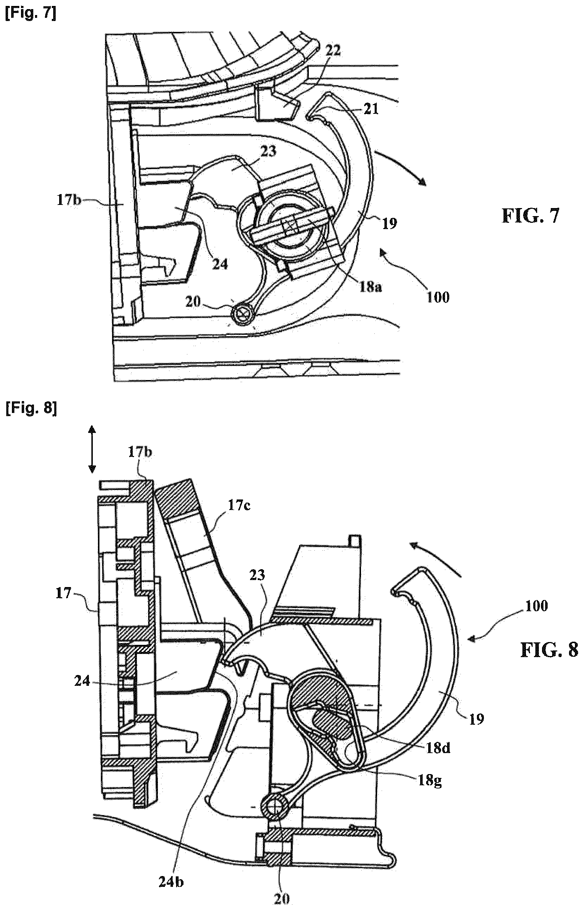

Partant de la position de verrouillage illustrée sur la figure 5, pour ouvrir le capot 5 et retirer l'unité d'alimentation électrique 17, on introduit la clé 18a dans le rotor 18c, comme illustré sur la figure 6. Par rotation de la clé 18a, on fait pivoter le tenon 18d qui porte alors contre la came 18g (figure 8) en repoussant le levier de verrouillage 19 à l'encontre de l'effort de rappel exercé par le ressort de rappel de levier 19a jusqu'à l'amener dans sa position de libération comme illustré sur la figure 7. En allant vers cette position, en premier l'excroissance de capot 22 échappe au bec distal d'accrochage de capot 21, et dans un second temps l'excroissance de batterie 24 échappe au bec proximal d'accrochage de batterie 23. Dès lors, le capot 5 est libéré et pivote jusqu'à sa position escamotée sous l'action du ressort de rappel de capot 16, tandis que l'unité d'alimentation électrique 17 est également libérée et pivote légèrement vers l'extérieur du compartiment de réception 3 par l'effet de la poussée du ressort de calage 25. L'ouverture du capot 5 est ainsi facilitée, et la préhension de l'unité d'alimentation électrique 17 est également facilitée.

À partir de la position de libération illustrée sur la figure 7, si l'utilisateur relâche la clé 18a, un léger retour du levier de verrouillage 19, jusqu'à une position intermédiaire illustrée sur la figure 8, fait porter le bec proximal d'accrochage de batterie 23 contre la facette frontale de fermeture 24b. De la sorte, on comprend que l'excroissance de batterie 24 et le bec proximal d'accrochage de batterie 23 sont agencés de façon que, lors d'une rotation du levier de verrouillage 19 vers sa position de verrouillage sous l'action de son ressort de rappel de levier 19a, alors que l'unité d'alimentation électrique 17 est pivotée légèrement vers l'extérieur du compartiment de réception 3, le bec proximal d'accrochage de batterie 23 bute contre la face frontale 24b de l'excroissance de batterie 24 et ne s'oppose pas à l'extraction de l'unité d'alimentation électrique 17 hors du compartiment de réception 3. Dans cette position, l'utilisateur peut tirer sur une poignée 17c de l'unité d'alimentation électrique 17 pour l'extraire de façon simple.

En alternative, l'utilisateur peut choisir de repousser l'unité d'alimentation électrique 17 dans le fond du compartiment de réception 3 afin de comprimer le ressort de calage 25, permettant de bloquer à nouveau l'unité d'alimentation électrique 17 car le levier de verrouillage 19 sollicité par le ressort de rappel de levier 19a pivote vers sa position de maintien et le bec proximal d'accrochage de batterie 23 vient porter à nouveau sur la facette supérieure de verrouillage 24a.

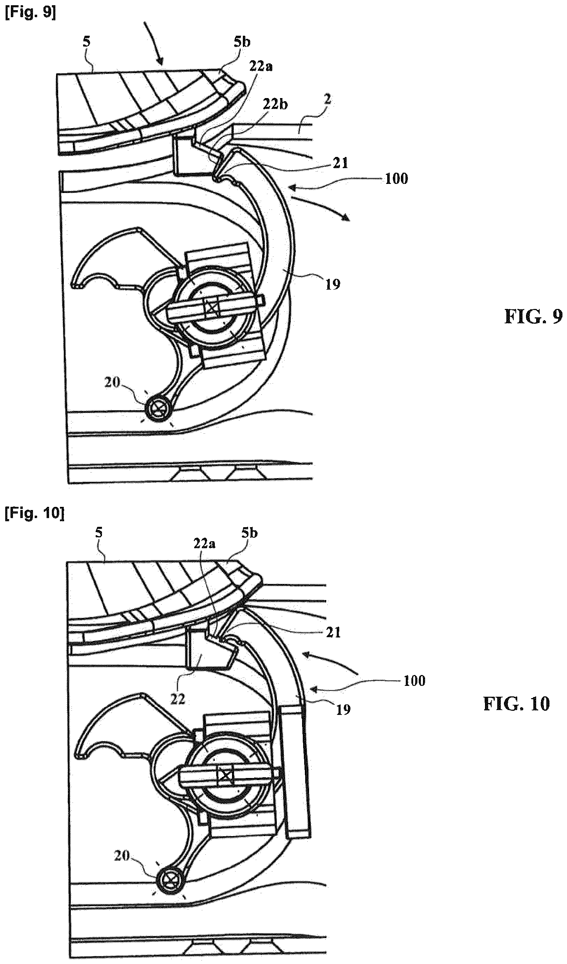

À partir d'une position dans laquelle le capot 5 est en position escamotée, et dans laquelle le compartiment de réception 3 ne contient pas l'unité d'alimentation électrique 17, l'utilisateur peut refermer et verrouiller le capot 5 par une simple poussée manuelle du capot 5 pour le rabattre contre la poutre 2. En effet, comme on le voit sur la figure 9, lorsque la seconde extrémité de capot 5b vient à proximité de la poutre 2, la facette frontale de fermeture 22b vient porter contre le bec distal d'accrochage de capot 21 et repousse le levier de verrouillage 19 vers sa position de libération, autorisant la poursuite du pivotement du capot 5 vers sa position de fermeture. Le bec distal d'accrochage de capot 21 revient ensuite en position de verrouillage de capot, portant contre la facette supérieure de verrouillage 22a comme illustré sur la figure 10. Le capot 5 est alors plaqué de façon étanche contre la poutre 2.

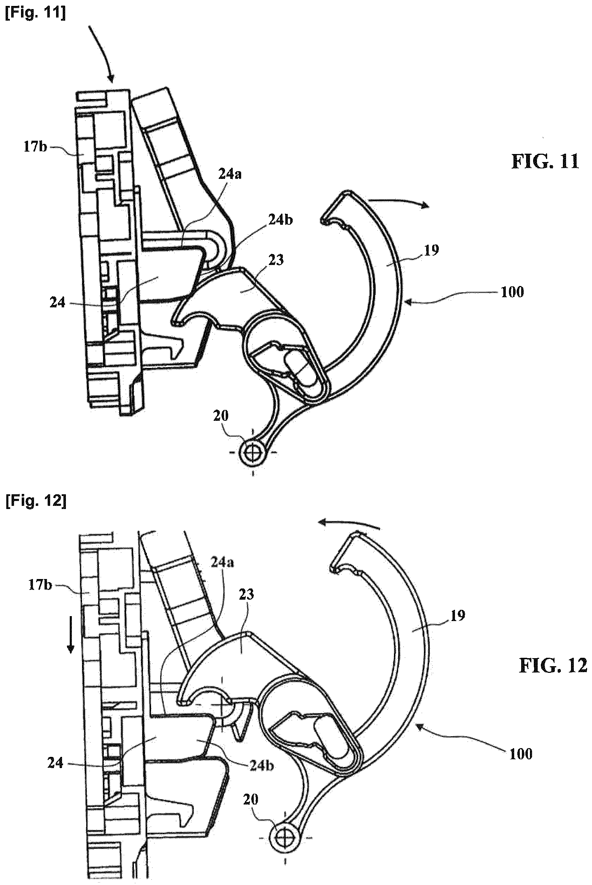

À partir d'une position dans laquelle le capot 5 est en position escamotée, et dans laquelle le compartiment de réception 3 ne contient pas l'unité d'alimentation électrique 17, l'utilisateur peut introduire l'unité d'alimentation électrique 17 dans le compartiment de réception 3 par une simple poussée manuelle de l'unité d'alimentation électrique 17 vers le fond du compartiment de réception 3. En effet, lorsque la seconde extrémité de batterie 17b pénètre dans le compartiment de réception 3, comme illustré sur la figure 11, la facette frontale 24b vient porter contre le bec proximal d'accrochage de batterie 23 et repousse le levier de verrouillage 19 vers sa position de libération, autorisant la poursuite de pénétration de la seconde extrémité de batterie 17b vers le fond du compartiment de réception 3 sous l'action de la poussée exercée par l'utilisateur. Le bec proximal d'accrochage de batterie 23 revient ensuite en position de maintien de batterie, venant en appui contre la facette supérieure de verrouillage 24a, assurant un maintien partiel de l'unité d'alimentation électrique 17 dans le compartiment de réception 3.

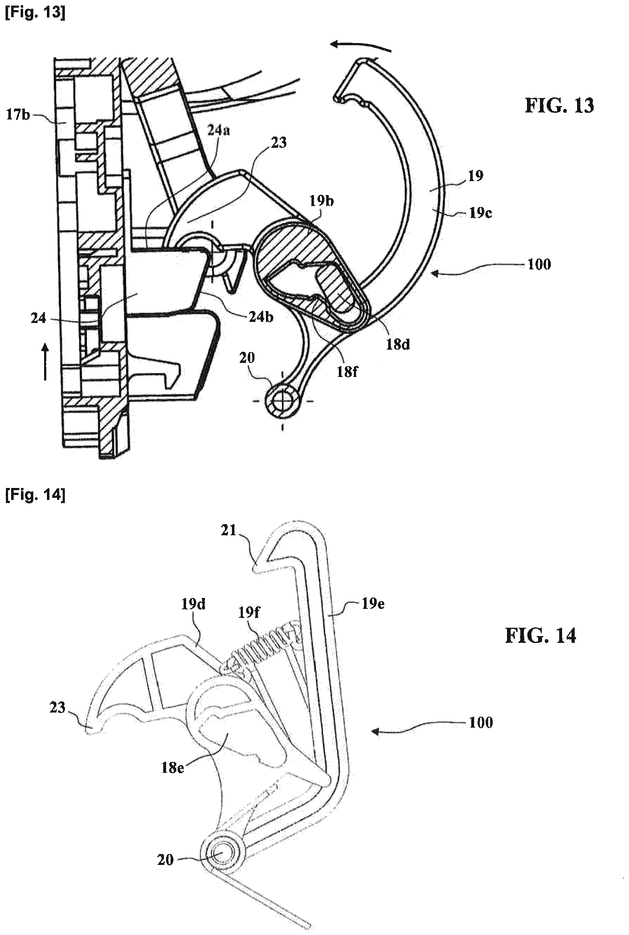

Ensuite, l'utilisateur peut poursuivre naturellement le mouvement de poussée de l'unité d'alimentation électrique 17 vers le fond du compartiment de réception 3, comme illustré sur la figure 12, comprimant le ressort de calage 25. La clé 18a est alors en position de verrouillage et peut être extraite. Lorsque l'utilisateur relâche l'unité d'alimentation électrique 17, celle-ci est repoussée par le ressort de calage 25 et retenue par le bec proximal d'accrochage de batterie 23 en appui sur la facette supérieure de verrouillage 24a, comme illustré sur la figure 13. Autrement dit, l'excroissance de batterie 24 et le bec proximal d'accrochage de batterie 23 sont agencés de façon que la rotation finale du levier de verrouillage 19 vers sa position de verrouillage provoque une pression sur l'unité d'alimentation électrique 17 en plaquant une zone de seconde extrémité de batterie 17b dans le fond du compartiment de réception 3.

En alternative, l'utilisateur peut stopper le mouvement de poussée de l'unité d'alimentation électrique 17 vers le fond du compartiment de réception 3, et le complément de déplacement de l'unité d'alimentation électrique 17 vers le fond sera alors réalisé par rotation de la clé 18a vers la position de verrouillage/extraction. Dans cette séquence, on est en position de verrouillage et la clé est retirée.

À partir de cette position de verrouillage de batterie illustrée sur la figure 13, l'utilisateur peut vouloir rabattre le capot 5 pour atteindre la position illustrée sur la figure 5. Dans ce mouvement, le levier de verrouillage 19 est bloqué par le tenon 18d fixe. L'excroissance de capot 22 repousse le bec distal d'accrochage de capot 21 en déformant élastiquement la deuxième branche 19c du levier de verrouillage 19 sans toutefois libérer l'unité d'alimentation électrique 17 car le bec proximal d'accrochage de batterie 23 est agencé de façon à rester alors en appui sur la facette supérieure de verrouillage 24a.

Après une rotation supplémentaire du capot 5 vers sa position de fermeture, l'excroissance de capot 22 laisse revenir la deuxième branche 19c du levier de verrouillage 19 dans sa forme initiale, assurant ainsi le verrouillage du capot 5 tout en plaquant une zone de seconde extrémité de capot 5b contre un rebord périphérique d'une zone de seconde extrémité d'ouverture 4b.

Les différents modes fonctionnels du système serrure/came/levier de ce premier mode de réalisation sont les suivants :
- clé 18a absente et levier de verrouillage 19 en position verrouillée : la rotation de ce dernier est rendue impossible par un appui de la came 18f sur la partie frontale du tenon 18d ;
- clé 18a insérée sans action de l'utilisateur sur la clé : le tenon 18d est alors libre en rotation et est :
   soit piloté par le levier de verrouillage 19 sur sa face frontale lors de son basculement dans le sens de l'ouverture,
   soit piloté par le levier de verrouillage 19 sur sa face dorsale lors de son basculement dans le sens de la fermeture ;
   en l'absence de l'unité d'alimentation électrique 17, le levier de verrouillage 19 (sous l'action du ressort de levier 19a) est rappelé en position de verrouillage,
   en présence de l'unité d'alimentation électrique 17, le levier de verrouillage 19 (sous l'action du ressort de levier 19a) est rappelé en une position de maintien déterminée par son appui sur l'excroissance de batterie 24 ;
- clé 18a insérée avec action de l'utilisateur sur la clé : le tenon 18d est piloté en rotation par la clé et entraîne :
   le levier de verrouillage 19 avec sa face dorsale pour assurer le basculement du levier de verrouillage 19 vers sa position de libération,
   le levier de verrouillage 19 avec sa face frontale pour assurer le basculement du levier de verrouillage 19 vers sa position de verrouillage ou de maintien.

On comprendra toutefois que, dans ce premier mode de réalisation de l'invention, il peut s'avérer difficile de maîtriser la force d'appui du capot 5 en comptant uniquement sur l'élasticité de la deuxième branche 19c du levier de verrouillage 19. On pourra pour cela préférer un second mode de réalisation à deux leviers distincts mais solidaires, tel qu'illustré sur la figure 14.

Dans ce second mode de réalisation, l'ensemble de verrouillage 100 commun comprend un levier de verrouillage principal 19d comportant le bec proximal d'accrochage de batterie 23, et un levier de verrouillage auxiliaire 19e comportant le bec proximal d'accrochage de capot 21. Le levier de verrouillage auxiliaire 19e et le levier de verrouillage principal 19d sont montés rotatifs autour du même axe de levier 20. Un ressort de liaison 19f, engagé entre les deux leviers, tend à rapprocher le levier de verrouillage auxiliaire 19e vers le levier de verrouillage principal 19d, tout en autorisant l'écartement du levier de verrouillage auxiliaire 19e. Le ressort de rappel de levier 19a applique sa force de rappel sur le levier de verrouillage principal 19d pour tendre à le faire pivoter jusqu'à sa position de verrouillage ou de maintien. Le logement à cames 18e est réalisé dans le levier de verrouillage principal 19d, qui est ainsi sollicité par le moyen d'engagement de verrou à clé 18.

Lorsque l'unité d'alimentation électrique 17 est introduite et verrouillée (par l'extraction de la clé) le capot 5 peut être rabattu. Son excroissance de capot 22 entre en contact avec le bec proximal d'accrochage de capot 21 et tend à éloigner le levier de verrouillage auxiliaire 19e à l'écart du levier de verrouillage principal 19d à l'encontre de l'effort de retenue exercé par le ressort de liaison 19f. Le ressort de liaison 19f entre les deux leviers génère l'effort d'appui du capot 5 sur le cadre du vélo. L'effort de plaquage est bien maîtrisé.

Le levier n'est plus unique, mais l'action reste unique. Une rotation de la clé 18a en fermeture permet le verrouillage/calage immédiat de l'unité d'alimentation électrique 17, et le verrouillage/placage du capot 5 dès que celui-ci sera rabattu. La rotation de la clé 18a en ouverture libère l'unité d'alimentation électrique 17 et le capot 5 immédiatement. Les différents modes fonctionnels sont similaires de ceux du premier mode de réalisation.

La présente invention n'est pas limitée aux modes de réalisation qui ont été explicitement décrits, mais elle en inclut les diverses variantes et généralisations contenues dans le domaine des revendications ci-après.

## Revendications

1. Véhicule (1) ayant un compartiment de réception (3) allongé entre une première extrémité de compartiment (3a) et une seconde extrémité de compartiment (3b) et conformé pour recevoir et contenir une unité d'alimentation électrique (17) amovible elle-même allongée entre une première extrémité de batterie (17a) venant se loger dans la première extrémité de compartiment (3a) et une seconde extrémité de batterie (17b) venant se loger dans la seconde extrémité de compartiment (3b), le véhicule (1) comprenant :
- une ouverture (4) conformée pour autoriser l'introduction de l'unité d'alimentation électrique (17) dans le compartiment de réception (3) et son extraction hors du compartiment de réception (3),
- un capot (5), mobile entre une position de fermeture dans laquelle il occulte ladite ouverture (4) et une position escamotée dans laquelle il libère ladite ouverture (4) pour autoriser l'introduction ou l'extraction de l'unité d'alimentation électrique (17) à travers ladite ouverture (4),
- une charnière (6), comportant une partie fixe de charnière (9), solidaire du véhicule (1) ou prévue sur celui-ci, et une partie mobile de charnière (10) reliée au capot (5) et montée rotative autour d'un axe de rotation de capot (9a) solidaire de la partie fixe de charnière (9), la charnière (6) reliant le capot (5) au véhicule (1) et autorisant le déplacement dudit capot (5) par rotation entre sa position de fermeture et sa position escamotée,
dans lequel :
- l'ouverture (4) est allongée entre une première extrémité d'ouverture (4a) correspondant à la première extrémité de compartiment (3a) et une seconde extrémité d'ouverture (4b) correspondant à la seconde extrémité de compartiment (3b),
- la charnière (6) relie une première extrémité du capot (5a) au véhicule (1) selon la première extrémité d'ouverture (4a),
- des moyens de verrouillage de capot (7), actionnables par un utilisateur, sont agencés pour maintenir et verrouiller de façon réversible une seconde extrémité du capot (5b) au véhicule (1) selon la seconde extrémité d'ouverture (4b), **caractérisé en ce que** :
- des moyens de verrouillage de batterie (8), actionnables par l'utilisateur, sont agencés pour maintenir et verrouiller de façon réversible une zone de seconde extrémité de batterie (17b) plaquée dans le fond du compartiment de réception (3) au voisinage de la seconde extrémité d'ouverture (4b),
- les moyens de verrouillage de capot (7) et les moyens de verrouillage de batterie (8) sont reliés les uns aux autres de façon à fonctionner simultanément sous l'effet d'une sollicitation unique de l'utilisateur produisant le verrouillage et/ou le déverrouillage du capot (5) et de l'unité d'alimentation électrique (17).

2. Véhicule (1) selon la revendication 1, **caractérisé en ce que** les moyens de verrouillage de capot (7) et les moyens de verrouillage de batterie (8) comprennent un ensemble de verrouillage (100) commun :
- monté rotatif autour d'un axe de levier (20) transversal fixe du véhicule (1 ) entre une position de verrouillage et une position de libération,
- comprenant un bec distal d'accrochage de capot (21) et un bec proximal d'accrochage de batterie (23),
- le bec distal d'accrochage de capot (21) étant agencé de façon à tenir une zone de seconde extrémité du capot (5b) plaquée contre un rebord périphérique d'une zone de la seconde extrémité d'ouverture (4b) lorsque l'ensemble de verrouillage (100) commun est en position de verrouillage,
- le bec proximal d'accrochage de batterie (23) étant agencé de façon à tenir une zone de seconde extrémité de batterie (17b) plaquée dans le fond du compartiment de réception (3) lorsque l'ensemble de verrouillage (100) commun est en position de verrouillage ou de maintien.

3. Véhicule (1) selon la revendication 2, **caractérisé en ce que** l'ensemble de verrouillage (100) commun est actionnable par l'utilisateur au moyen d'une clé (18a) pouvant être engagée dans un rotor (18c) à tenon (18d) excentré engagé dans un logement à cames (18e) et dont la rotation produit le pivotement de l'ensemble de verrouillage (100) commun entre sa position de verrouillage et sa position de libération.

4. Véhicule (1) selon l'une des revendications 2 ou 3, **caractérisé en ce que** :
- le capot (5) comprend une excroissance de capot (22) sur laquelle vient porter le bec distal d'accrochage de capot (21) lorsque le capot (5) est en position de fermeture et l'ensemble de verrouillage (100) commun est en position de verrouillage,
- l'excroissance de capot (22) et le bec distal d'accrochage de capot (21) sont agencés de façon que la rotation finale de l'ensemble de verrouillage (100) commun vers sa position de verrouillage provoque une rotation finale du capot (5) jusqu'à sa position de fermeture en plaquant une zone de seconde extrémité de capot (5b) contre un rebord périphérique d'une zone de seconde extrémité de l'ouverture (4b).

5. Véhicule (1) selon l'une quelconque des revendications 2 à 4, associé à une unité d'alimentation électrique (17) comportant une excroissance de batterie (24),
**caractérisé en ce que** :
- le bec proximal d'accrochage de batterie (23) vient porter sur l'excroissance de batterie (24) lorsque l'ensemble de verrouillage (100) commun est en position de verrouillage,
- l'excroissance de batterie (24) et le bec proximal d'accrochage de batterie (23) sont agencés de façon que la rotation finale de l'ensemble de verrouillage (100) commun vers sa position de verrouillage provoque une pression sur l'unité d'alimentation électrique (17) en plaquant une zone de seconde extrémité de batterie (17b) dans le fond du compartiment de réception (3).

6. Véhicule (1) selon l'une quelconque des revendications 2 à 5, associé à une unité d'alimentation électrique (17) comportant une excroissance de batterie (24),
**caractérisé en ce que** :
- le capot (5) est sollicité par un ressort de rappel de capot (16), disposé sur son axe de rotation de capot (9a), et qui est agencé pour le faire pivoter jusqu'à sa position escamotée en l'absence d'un obstacle ou d'une sollicitation de retenue exercée par l'utilisateur,
- l'unité d'alimentation électrique (17) est sollicitée par un ressort de calage (25), disposé entre la zone de seconde extrémité de batterie (17b) et le fond du compartiment de réception (3), et qui tend à repousser la zone de seconde extrémité de batterie (17b) hors du compartiment de réception (3),
- de sorte que la rotation de l'ensemble de verrouillage (100) commun vers sa position de libération, produite par une manoeuvre de la clé (18a), provoque quasi simultanément la libération du capot (5) qui pivote jusqu'à sa position escamotée sous l'action du ressort de rappel de capot (16), et la libération de l'unité d'alimentation électrique (17) qui pivote légèrement vers l'extérieur du compartiment de réception (3) sous la poussée du ressort de calage (25) pour faciliter sa préhension par l'utilisateur.

7. Véhicule (1) selon l'une quelconque des revendications 2 à 6, **caractérisé en ce que** l'ensemble de verrouillage (100) commun est sollicité en permanence par un ressort de rappel de levier (19a) qui tend à le faire pivoter jusqu'à sa position de verrouillage (unité d'alimentation électrique absente) ou de maintien (unité d'alimentation électrique présente).

8. Véhicule (1) selon les revendications 6 et 7, **caractérisé en ce que** l'excroissance de batterie (24) et le bec proximal d'accrochage de batterie (23) sont agencés de façon que, lors d'une rotation de l'ensemble de verrouillage (100) commun vers sa position de verrouillage sous l'action de son ressort de rappel de levier (19a), alors que l'unité d'alimentation électrique (17) est pivotée légèrement vers l'extérieur du compartiment de réception (3), le bec proximal d'accrochage de batterie (23) bute contre une facette frontale de fermeture (24b) de l'excroissance de batterie (24), de sorte que le bec proximal d'accrochage de batterie (23) ne s'oppose pas à l'extraction de l'unité d'alimentation électrique (17) hors du compartiment de réception (3).

9. Véhicule (1) selon les revendications 6 et 7, **caractérisé en ce que** l'excroissance de capot (22) et le bec distal d'accrochage de capot (21) sont agencés avec des faces d'appui (22a) correspondantes de façon que, lorsque l'unité d'alimentation électrique (17) est absente ou engagée dans le fond du compartiment de réception (3), lorsque l'ensemble de verrouillage (100) commun est dans sa position de verrouillage sous l'action de son ressort de rappel de levier (19a), et lorsqu'une poussée est appliquée sur le capot (5) pour le faire pivoter vers sa position de fermeture, l'excroissance de capot (22) repousse le bec distal d'accrochage de capot (21) sans toutefois libérer l'unité d'alimentation électrique (17), et
- clé (18a) présente, donc en position de maintien : la fermeture du capot (5) génère une légère rotation de l'ensemble de verrouillage (100) commun ; après fermeture du capot (5), il faut que l'utilisateur génère un effort sur la clé (18a) pour atteindre la position de verrouillage/extraction en plaquant une zone de seconde extrémité du capot (5b) contre un rebord périphérique d'une zone de seconde extrémité d'ouverture (4b) ;
- clé (18a) retirée : la fermeture du capot (5) génère une déformation de l'ensemble de verrouillage (100) commun et permet son verrouillage, puis laisse revenir l'ensemble de verrouillage (100) commun dans sa forme initiale, assurant ainsi le verrouillage du capot (5) tout en plaquant une zone de seconde extrémité du capot (5b) contre un rebord périphérique d'une zone de seconde extrémité d'ouverture (4b).

10. Véhicule (1) selon les revendications 6 et 7, **caractérisé en ce que** l'excroissance de batterie (24) et le bec proximal d'accrochage de batterie (23) sont agencés avec des faces d'appui (24a, 24b) correspondantes de façon que, lors d'une manoeuvre d'introduction de l'unité d'alimentation électrique (17) dans le compartiment de réception (3) avec la clé (18a) présente, lorsque l'ensemble de verrouillage (100) commun est dans sa position de verrouillage sous l'action de son ressort de rappel de levier (19a), et lorsqu'une poussée est appliquée sur l'unité d'alimentation électrique (17) pour la faire pivoter vers sa position d'engagement complet dans le compartiment de réception (3), l'excroissance de batterie (24) repousse le bec proximal d'accrochage de batterie (23) et l'ensemble de verrouillage (100) commun à l'écart de sa position de verrouillage, puis laisse revenir l'ensemble de verrouillage (100) commun vers sa position de maintien sous l'action de son ressort de rappel de levier (19a), l'ensemble de verrouillage (100) commun assurant ainsi la retenue de l'unité d'alimentation électrique (17) dans le compartiment de réception (3) en l'attente d'un verrouillage ( maintien de l'effort et simple extraction de la clé (18a), ou arrêt de l'effort et verrouillage/extraction par rotation de la clé (18a) par l'utilisateur).

11. Véhicule (1) selon l'une quelconque des revendications 2 à 10, **caractérisé en ce que** l'ensemble de verrouillage (100) commun comprend un levier de verrouillage monobloc (19) comportant une première branche (19b) portant le bec proximal d'accrochage de batterie (23) et une deuxième branche (19c) portant le bec distal d'accrochage de capot (21).

12. Véhicule (1) selon l'une quelconque des revendications 8 à 10, **caractérisé en ce que** l'ensemble de verrouillage (100) commun comprend un levier de verrouillage principal (19d) comportant le bec proximal d'accrochage de batterie (23), un levier de verrouillage auxiliaire (19e) comportant le bec proximal d'accrochage de capot (21), et un ressort de liaison (19f) tendant à rapprocher le levier de verrouillage auxiliaire (19e) vers le levier de verrouillage principal (19d), le levier de verrouillage auxiliaire (19e) et le levier de verrouillage principal (19d) étant montés rotatifs autour du même axe de levier (20), le ressort de rappel de levier (19a) appliquant sa force de rappel sur le levier de verrouillage principal (19d) pour tendre à le faire pivoter jusqu'à sa position de verrouillage ou de maintien.

13. Véhicule (1) selon l'une quelconque des revendications 1 à 12, **caractérisé en ce que** :
- la partie mobile de charnière (10) est reliée au capot (5) par des moyens de liaison mécanique débrayable (11) et des moyens de butée de retenue (14),
- les moyens de liaison mécanique débrayable (11) sont conformés pour assurer une liaison fixe entre le capot (5) et la partie mobile de charnière (10) en l'absence de sollicitations mécaniques forçant le capot (5) à l'écart de la partie mobile de charnière (10) selon une intensité supérieure à un seuil de déclenchement prédéterminé,
- les moyens de liaison mécanique débrayable (11) sont conformés pour inhiber leur effet de retenue du capot (5) vis-à-vis de la partie mobile de charnière (10) en présence d'au moins une sollicitation mécanique forçant le capot (5) à l'écart de la partie mobile de charnière (10) selon une intensité supérieure audit seuil de déclenchement prédéterminé,
- les moyens de liaison mécanique débrayable (11) sont conformés pour permettre de relier à nouveau de façon fixe le capot (5) à la partie mobile de charnière (10) par rapprochement manuel du capot (5) et de la partie mobile de charnière (10) l'un contre l'autre,
- les moyens de butée de retenue (14) sont conformés pour s'opposer à l'écartement du capot (5) vis-à-vis de la partie mobile de charnière (10) au-delà d'une course d'écartement prédéterminée et pour autoriser une oscillation limitée du capot (5) vis-à-vis de la partie mobile de charnière (10), après un débrayage des moyens de liaison mécanique débrayable (11).

14. Véhicule (1) selon la revendication 13, **caractérisé en ce que** les moyens de liaison mécanique débrayable (11) comprennent :
- un bras de charnière (12), solidaire de la partie mobile de charnière (10), et se développant longitudinalement entre une première extrémité proximale (12a) et une seconde extrémité distale (12b),
- une rainure longitudinale (13), prévue sur une face interne du capot (5), et conformée pour recevoir et retenir sélectivement ledit bras de charnière (12),
- une butée distale escamotable (15), conformée pour prendre sélectivement un état de retenue dans lequel elle retient dans ladite rainure longitudinale (13) la seconde extrémité du bras de charnière (12b), et un état de libération dans lequel elle libère la seconde extrémité du bras de charnière (12b) vis-à-vis de la rainure longitudinale (13),
- une butée proximale (14), conformée pour retenir la première extrémité du bras de charnière (12a) dans ladite rainure longitudinale (13) lorsque la butée distale (15) est en état de retenue, et conformée pour s'opposer à l'écartement du capot (5) vis-à-vis de la partie mobile de charnière (10) au-delà d'une course d'écartement prédéterminée et pour autoriser une oscillation limitée du capot (5) vis-à-vis de la partie mobile de charnière (10), lorsque la butée distale (15) est en état de libération.
